# EUROPEAN PATENT SPECIFICATION

(11) **EP 2 055 992 B1**
(45) Date of publication and mention of the grant of the patent: **12.12.2012**
(21) Application number: 07792306.8
(22) Date of filing: 09.08.2007
(51) Int. Cl.: F16H 47/02, F16H 61/682, F16H 61/4035, F16H 61/4148

(54) **TRAVEL CONTROL DEVICE FOR HYDRAULICALLY DRIVEN VEHICLE**
FAHRSTEUERVORRICHTUNG FÜR HYDRAULISCH ANGETRIEBENES FAHRZEUG
DISPOSITIF DE COMMANDE DE DÉPLACEMENT DE VÉHICULE À ENTRAÎNEMENT HYDRAULIQUE

(30) Priority: 09.08.2006 JP 2006217077
(43) Date of publication of application: 06.05.2009
(73) Proprietor: Hitachi Construction Machinery Co., Ltd, Tokyo 112-0004 (JP)
(72) Inventor: KODAKA, Katsuaki, Tsuchiura-shi, Ibaraki 300-0013 (JP); SATAKE, Hidetoshi, Tsuchiura-shi, Ibaraki 300-0013 (JP)
(74) Representative: Hatzmann, Martin
(86) International application number: PCT/JP2007/065656
(87) International publication number: WO 2008/018563

(56) References cited:
- EP-A1- 1 580 466
- EP-A1- 1 610 040
- JP-A- 01 240 328
- JP-A- 04 136 555
- JP-A- 05 223 169
- JP-A- 06 193 730
- JP-A- 06 201 019
- JP-A- 11 013 089
- JP-A- 11 210 879

## Description

### TECHNICAL FIELD

The present invention relates to a traveling control device for a hydraulically-driven vehicle such as a wheel hydraulic excavator.

### BACKGROUND ART

There is a hydraulically-driven vehicle known in the related art (see patent reference literature 1) that is engaged in traveling operation with pressure oil output from a hydraulic pump and supplied to a traveling hydraulic motor via a main pipeline as a control valve is driven with pilot pressure generated in response to an operation of a traveling pedal. The structure disclosed in patent reference literature 1 includes a variable relief valve via which the pressure oil from the main pipeline is relieved with the relief pressure at the variable relief valve controlled in correspondence to the pilot pressure generated as the traveling pedal is operated.

Patent reference literature 1 : Japanese Laid Open Patent Publication No. H6-193730

[003a] EP 1610040 discloses a traveling control device for a hydraulically-driven vehicle in accordance with the preamble of claim 1 and method claim 4.

[003b] JP H11-210879 discloses a traveling control device for a hydraulically-driven vehicle having a controller which suddenly increases the stroke a directional control valve at the time of engine acceleration in response to increase of an engine speed, and decreases slowly the stroke of the valve at the time of deceleration, dependent on a vehicle speed signal, an engine speed signal and a FR command signal.
JP 11210879 discloses a travelling control which during deceleration decreases slowly the stake of the directional control valve.

### DISCLOSURE OF INVENTION

### PROBLEMS TO BE SOLVED BY THE INVENTION

As the pilot pressure generated in the hydraulically-driven vehicle disclosed in patent reference literature 1 increases, the relief pressure also increases. This means that if the driver steps on the traveling pedal suddenly while the vehicle is ready to travel or is traveling at low speed, the vehicle will jerk ahead abruptly or accelerate too much, inducing a significant shock.

### MEANS FOR SOLVING THE PROBLEMS

A traveling control device for a hydraulically-driven vehicle according to a first aspect of the present invention, comprises: a traveling hydraulic motor driven by oil delivered from a hydraulic pump; a speed-reducing mechanism with an adjustable speed-reduction ratio, that slows down rotation of the hydraulic motor and transmits the slowed rotation to wheels; a pressure oil control device that controls a flow of pressure oil from the hydraulic pump to the hydraulic motor in correspondence to an extent to which a traveling pedal is operated; a speed-reduction ratio detection device that detects the speed-reduction ratio at the speed-reducing mechanism; and an acceleration limiting device that restricts accelerating operation of the hydraulic motor achieved in response to an operation of the traveling pedal, when an acceleration-limiting condition, that is, the speed-reduction ratio detected by the speed-reduction ratio detection device is equal to or greater than a predetermined value, is met.
A traveling control device for a hydraulically-driven vehicle according to a second aspect of the present invention, comprises: a variable displacement traveling hydraulic motor driven by oil delivered from a hydraulic pump; a pressure oil control device that controls a flow of pressure oil from the hydraulic pump to the hydraulic motor in correspondence to an extent to which a traveling pedal is operated; a motor displacement detection device that detects a motor displacement of the hydraulic motor; and an acceleration limiting device that restricts accelerating operation of the hydraulic motor achieved in response to an operation of the traveling pedal, when an acceleration-limiting condition, that is, the motor displacement detected by the motor displacement detection device is equal to or greater than a predetermined value, is met.
A traveling control device for a hydraulically-driven vehicle according to a third aspect of the present invention, comprises: a variable displacement traveling hydraulic motor driven by oil delivered from a hydraulic pump; a speed-reducing mechanism with an adjustable speed-reduction ratio, that slows down rotation of the hydraulic motor and transmits the slowed rotation to wheels; a pressure oil control device that controls a flow of pressure oil from the hydraulic pump to the hydraulic motor in correspondence to an extent to which a traveling pedal is operated; an equivalent displacement calculating device that calculates an equivalent displacement assuming a correlation to a value obtained by multiplying a motor displacement of the hydraulic motor by the speed-reduction ratio at the speed-reducing mechanism; and an acceleration limiting device that restricts accelerating operation of the hydraulic motor achieved in response to an operation of the traveling pedal, when an acceleration-limiting condition, that is, the equivalent displacement calculated by the equivalent displacement calculating device is equal to or greater than a predetermined value, is met.
According to a fourth aspect of the present invention, in the traveling control device for a hydraulically-driven vehicle according to any one of the first to third aspects, it is preferable that the pressure oil control device is a control valve driven by pilot pressure corresponding to the extent to which the traveling pedal is operated; and the acceleration limiting device slows down response of the control valve to the pilot pressure when the acceleration-limiting condition is met, compared to response of the control valve when no acceleration-limiting condition is met.
According to a fifth aspect of the present invention, the traveling control device for a hydraulically-driven vehicle according to any one of the first to fourth aspects, may further comprise a vehicle speed detection device that detects a vehicle speed, wherein the acceleration limiting device may limit the accelerating operation when the acceleration-limiting condition is met and the vehicle speed detected by the vehicle speed detection device is equal to or less than a predetermined value.
A traveling control method adopted in a hydraulically-driven vehicle according to a sixth aspect of the present invention, comprises: detecting an acceleration-limiting condition, that is, (a) a speed-reduction ratio at a speed-reducing mechanism is equal to or greater than a predetermined value, (b) a motor displacement of a variable displacement traveling hydraulic motor is equal to or greater than a predetermined value or (c) an equivalent displacement assuming a correlation to a value obtained by multiplying the motor displacement by the speed-reduction ratio at the speed-reducing mechanism is equal to or greater than a predetermined value; and restricting accelerating operation of the hydraulic motor achieved if response to an operation of a traveling pedal, when the acceleration-limiting condition is met.
According to a seventh aspect of the present invention, a hydraulically-driven vehicle equipped with a traveling control device according to any of the first to fifth aspects.

### EFFECT OF THE INVENTION

According to the present invention, an abrupt start and abrupt acceleration of the vehicle can be prevented by restricting operation of the traveling pedal.

### BRIEF DESCRIPTION OF THE DRAWINGS

FIG. 1 is a side elevation of a wheel hydraulic excavator that may adopt an embodiment of the present invention;
FIG. 2 is a hydraulic circuit diagram of a traveling control device achieved in the embodiment of the present invention;
FIG. 3 presents a graph indicating the relationship between the motor drive pressure and the motor displacement of the hydraulic motor;
FIG. 4 is a block diagram of the traveling control device achieved in the embodiment of the present invention;
FIG. 5 presents a flowchart of the procedure of the processing executed in the traveling control device in FIG. 4; and
FIG. 6 presents an example of a variation of the embodiment of the present invention.

### BEST MODE FOR CARRYING OUT THE INVENTION

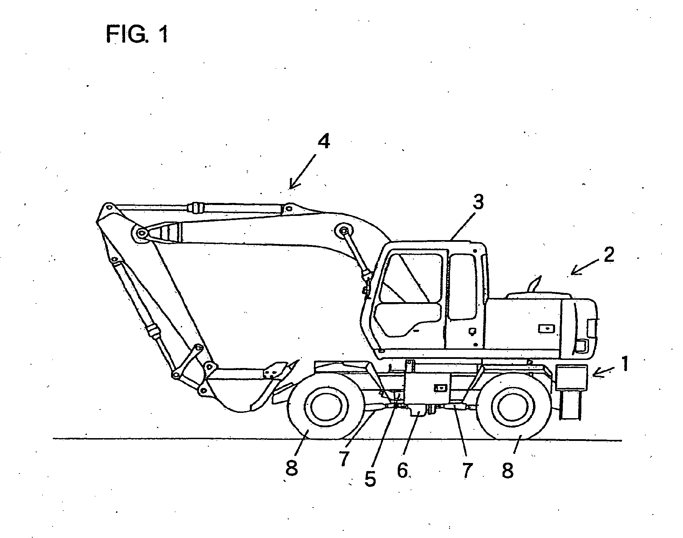

The following is a description of an embodiment of a traveling control device for a hydraulically-driven vehicle according to the present invention given in reference to FIGS. 1 ~ 6.
FIG. 1 shows a wheel hydraulic excavator that may adopt the embodiment of the present invention. The wheel hydraulic excavator includes a traveling undercarriage 1 and an upper revolving superstructure 2 rotatably mounted atop the traveling undercarriage 1. An operator's cab 3 and a work front attachment 4 are disposed at the upper revolving superstructure 2. A traveling hydraulic motor 5, a transmission 6, a propeller shaft 7 and tires 8 are disposed at the traveling undercarriage 1.

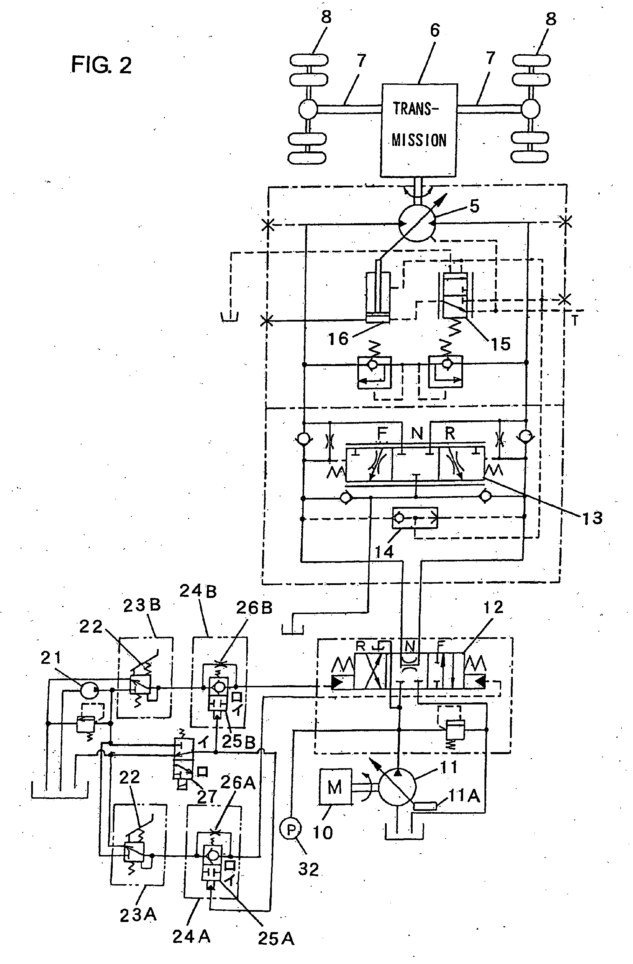

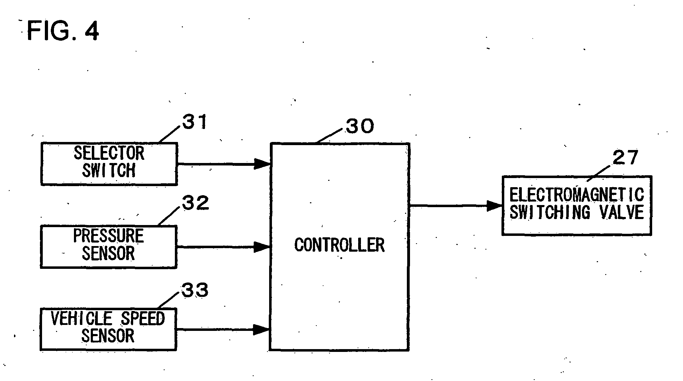

FIG. 2 is a traveling hydraulic circuit diagram pertaining to the hydraulic excavator achieved in the embodiment. As shown in FIG. 2, as pressure oil is supplied to the traveling hydraulic motor 5 via a counterbalance valve 13 from a hydraulic pump 11 driven by an engine 10, its direction and flow rate are controlled through a control valve 12. The rotation of the hydraulic motor 5 is first slowed down at the transmission 6 and is then communicated to the tires 8 via the propeller shaft 7, thereby causing the vehicle (hydraulic excavator) to travel. The speed-reduction ratio of the transmission 6 can be switched over through two stages, e.g., low (large speed-reduction ratio) and high (small speed-reduction ratio), via a selector switch 31 (see FIG. 4).

The displacement angle (displacement volume) of the hydraulic pump 11, which is a variable displacement pump, is controlled by a pump regulator 11A. The pump regulator 11A includes a torque-limiting unit to which the pump outlet pressure is fed back, and horse power control is executed so as to ensure that the load determined in correspondence to the pump outlet pressure and the pump displacement volume does not exceed the engine output. The regulator 11A further includes a maximum displacement limiting unit that determines the maximum flow rate for the hydraulic pump 11.

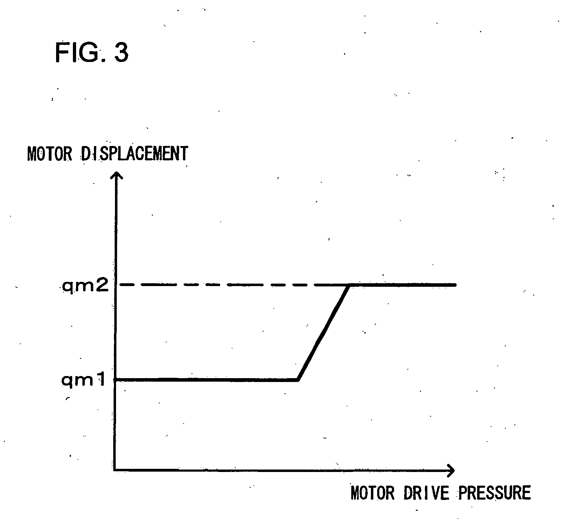

The hydraulic motor 5 is a variable displacement motor equipped with a self-pressure displacement control mechanism and the motor drive pressure is applied from a shuttle valve 14 to a control piston 15 and a servo piston 16 of the hydraulic motor 5. As a result, a small motor displacement qm1 is assumed over a low motor drive pressure range and a large motor displacement qm2 is assumed over a high motor drive pressure range, as shown in FIG. 3. The outlet pressure at the hydraulic pump 11 is detected by a pressure sensor 32. Since the pump pressure is determined based upon the motor drive pressure, a specific correlation exists between the motor drive pressure and the pump outlet pressure. Accordingly, the large motor displacement qm2 is assumed when the pump outlet pressure is equal to or greater than a predetermined value and the small motor displacement qm1 is assumed when the pump outlet pressure is equal to or smaller than a predetermined value. By this means, the pressure sensor 32 is able to detect (estimate) the motor displacement.

The switching direction along which the switchover occurs at the control valve 12 and the stroke length at the control valve 12 are controlled based upon the traveling pilot pressure originating from a pilot circuit. The pilot circuit includes a pilot pump 21, a pair of traveling pilot valves 23A and 23B that generate a pilot pressure corresponding to the extent to which an accelerator pedal 22 is pressed down and a pair of slow-return valves 24A and 24B respectively disposed between the pilot valve 23A and a pilot port of the control valve 12 and between the pilot valve 23B and a pilot port of the control valve 12.

While the slow-return valve 24A includes a restrictor 26A and a hydraulic switching valve 25A disposed in parallel to each other, the slow-return valve 24B includes a restrictor 26B and a hydraulic switching valve 25B disposed in parallel to each other. The hydraulic switching valves 25A and 25B are each switched to a position A or to a position B via an electromagnetic switching valve 27. Namely, as the electromagnetic switching valve 27 is switched to position B, the pilot pressure from the pilot pump 21 is applied to the hydraulic switching valves 25A and 25B. As a result, the hydraulic switching valves 25A and 25B are switched to position A, thereby disallowing the pilot pressure supply to the control valve 12 via the hydraulic switching valve 25A or 25B, and the pilot pressure from the pilot pump 21 is instead supplied to the control valve 12 via the restrictor 26A or 26B. As the electromagnetic switching valve 27 is switched to position A, the application of pilot pressure to the hydraulic switching valves 25A and 25B stops. Consequently, the hydraulic switching valves 25A and 25B are switched to position B, allowing the pilot pressure to be supplied to the control valve 12 via the hydraulic switching valve 25A or 25B instead of via the restrictor 26A or 26B.

The accelerator pedal 22 is allowed to rotate along the forward direction or the rearward direction as its front side is pressed down (front stepping operation) or its rear side is pressed down (rear stepping operation) . As the front side of the accelerator pedal 22 is pressed down, the pilot valve 23A is driven, whereas as the rear side of the accelerator pedal 22 is pressed down, the pilot valve 23B is driven.

FIG. 4 is a block diagram showing the control structure adopted in the traveling control device in the embodiment. The selector switch 31, which issues a speed-reduction ratio command for the transmission 6 in response to an operation at a gearshift lever installed in the operator's cab 3, the pressure sensor 32, which detects the pump outlet pressure and a vehicle speed sensor 33, which detects the vehicle speed, are connected to a controller 30. The controller 30 executes the following processing based upon signals input from these sensors and outputs a control signal to the electromagnetic switching valve 27.

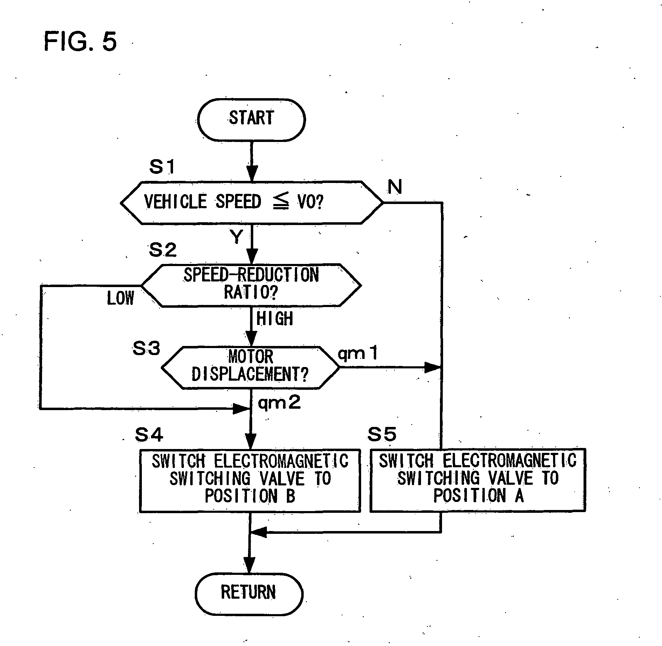

FIG. 5 presents a flowchart of an example of processing that may be executed in the controller 30. The processing in the flowchart starts as the vehicle enters a traveling-enabled state, e.g., as a work brake engaged during work becomes released. First, a decision is made in step S1 as to whether or not the vehicle speed detected via the vehicle speed sensor 33 is equal to or less than a predetermined specific value V0 (> 0) . The specific value V0 is a threshold value defining a vehicle speed range over which a shock attributable to an abrupt start or an abrupt acceleration will cause significant discomfort for the driver, i.e., a threshold value used to judge whether or not the vehicle is currently in a stationary state or traveling at low speed. An affirmative decision is made in step S1 if the vehicle is currently in a stationary state or traveling at low speed, and the operation proceeds to step S2. In step S2, a decision is made based upon the signal provided from the selector switch 31 as to whether the speed-reduction ratio is low or high. If the speed-reduction ratio is high, i.e., if the speed-reduction ratio is smaller than a predetermined value, the operation proceeds to step S3, whereas if the speed-reduction ratio is low, i.e., if the speed-reduction ratio is equal to or greater than the predetermined value, the operation skips step S3 and proceeds to step S4.

In step S3, a decision is made based upon the signal provided from the pressure sensor 32 as to whether or not the small motor displacement qm1 is currently assumed, i.e., whether or not the pump outlet pressure is equal to or greater than a predetermined value. If it is decided in step S3 that the large motor displacement qm2 is currently assumed, the operation proceeds to step S4 to switch the electromagnetic switching valve 27 to position B. As a result, the hydraulic switching valves 25A and 25B are switched to position A, thereby disallowing pilot pressure supply via the hydraulic switching valve 25A or 25B. If, on the other hand, it is decided in step S1 that the vehicle is currently traveling at high speed, or it is decided in step S2 that the speed-reduction ratio is high and it is also decided in step S3 that the small motor displacement qm1 is currently assumed, the operation proceeds to step S5. In step S5, the electromagnetic switching valve 27 is switched to position A. As a result, the hydraulic switching valves 25A and 25B are switched to position B, thereby allowing the pilot pressure to be supplied via the hydraulic switching valve 25A or 25B.

The primary operation of the traveling control device achieved in the embodiment is now explained. It is assumed in the description that the vehicle is engaged in forward traveling operation.
As the driver steps down on the front side of the accelerator pedal 22 while the hydraulic excavator is in a stationary state, the pilot valve 23A is driven in correspondence to the extent of the front stepping operation and the pilot pressure from the pilot valve 23A is applied to the control valve 12 via the slow-return valve 25A. As a result, the control valve 12 is switched to a position F, allowing the pressure oil from the hydraulic pump 11 to be guided to the hydraulic motor 5 via the control valve 12 and allowing the pressure oil to act as pilot pressure on the counterbalance valve 13 to switch the counterbalance valve 13 from the neutral position to the position F. The hydraulic motor 5 is thus driven and the hydraulic excavator is caused to travel forward.

When starting the vehicle at a work site on rough ground or on an uphill slope, a large traveling torque is required and, accordingly, the speed-reduction ratio is set to low by operating the gearshift lever. In addition, when the vehicle starts moving, the motor drive pressure increases. Thus, the large motor displacement qm2 is assumed and the hydraulic excavator starts traveling at low speed with high torque. In this situation, the electromagnetic switching valve 27 is switched to position B through the processing (step S4) described earlier. Consequently, the hydraulic switching valves 25A and 25B are switched to position A and the pilot pressure from the pilot valve 23A is applied to the control valve 12 via the restrictor 26A at the slow-return valve 24A. Thus, even if the driver steps hard on the accelerator pedal 22, the pilot pressure applied to the control valve 12 increases gradually. As a result, the control valve 12 makes a slow transition from the neutral position to the position F, which prevents the hydraulic excavator from jerking forward abruptly and helps reduce shock at the start of movement.

After the hydraulic excavator has started traveling, the hydraulic switching valve 25A remains at the position A (step S4) as long as the traveling speed is equal to or less than the predetermined value V0, the speed-reduction ratio is low and the large motor displacement qm2 is sustained. In this state, the pilot pressure does not increase rapidly even if the driver steps on the accelerator pedal 22 abruptly for rapid acceleration and instead, the control valve 12 makes a slow transition toward the position F. This means that, when the traveling torque is significant, the hydraulic excavator does not accelerate suddenly, assuring better driver comfort.

Once the vehicle starts traveling at a constant speed and the traveling torque decreases in a light-load condition, e.g., on a flat surface, the driver in the operator's cab operates the gearshift lever to switch the speed-reduction ratio to high and the small motor displacement qm1 is assumed in correspondence to the light load. Consequently, the electromagnetic switching valve 27 is switched to position A and the hydraulic switching valve 25A is switched to position B (step S5). As the driver steps on the accelerator pedal 22 in this state, pilot pressure from the pilot valve 23A is applied to the control valve 12 via the hydraulic switching valve 25A (check valve) without passing through the restrictor 26A. In response, the control valve 12 is immediately switched toward the position F and the hydraulic excavator accelerates with quick response to the operation of the accelerator pedal 22, assuring desirable acceleration performance. In this situation, the shock attributable to acceleration is minimized due to the small traveling torque.

When the vehicle is traveling at high speed exceeding the predetermined value V0, the electromagnetic switching valve 27 is switched to position A and the hydraulic switching valve 25A is switched to position B (step S5) even if the speed-reduction ratio is low or even if the large motor displacement qm2 is assumed. As a result, the pilot pressure generated in response to an operation of the accelerator pedal 22 immediately acts on the control valve 12, allowing the hydraulic excavator to accelerate with quick response to the operation of the accelerator pedal 22, thereby assuring desirable acceleration performance. In this situation, the driver is subjected to only a small shock and is assured of a comfortable ride since the vehicle speed is high.

If the driver in the vehicle traveling in response to a front stepping operation on the accelerator pedal 22 stops the operation of the accelerator pedal 22, the pilot valve 23A is set in communication with the reservoir. In this situation, the pilot pressure, having been applied to the control valve 12, is caused to return to the reservoir via the slow-return valve 24A and the pilot valve 23A. During this process, the flow of returning oil becomes constricted at the restrictor 26A of the slow-return valve 24A and thus, the control valve 12 makes a gradual transition to the neutral position. Abrupt deceleration of the vehicle is thus prevented and any deceleration shock is minimized.

The following operational effects can be achieved through the embodiment described above.
(1) If the speed-reduction ratio is set to low or the large motor displacement qm2 is assumed in the vehicle traveling at low speed with the vehicle speed V equal to or less than V0, the hydraulic switching valves 25A and 25B are switched to position A so as to guide the pilot pressure from the pilot valve 23A to the control valve 12 via the restrictor 26A. Thus, even if the driver steps on the accelerator pedal 22 abruptly, the control valve 12 makes a gradual changeover, which reduces the shock occurred as the vehicle starts moving or accelerates.
(2) If the speed-reduction ratio is set to high and the small motor displacement qm1 is assumed in the vehicle traveling at low speed, the hydraulic switching valves 25A and 25B are switched to position B so as to guide the pilot pressure from the pilot valve 23A to the control valve 12 via the check valve at the hydraulic switching valve 25A. Thus, as long as the traveling torque is small and the shock occurred during acceleration is not an issue, the vehicle is allowed to accelerate with quick response to the operation of the accelerator pedal 22.
(3) While the vehicle is traveling at high speed with the vehicle speed V greater than V0, the hydraulic switching valve 25A is switched to position B, regardless of the speed-reduction ratio or the motor displacement, so as to guide the pilot pressure from the pilot valve 23A to the control valve 12 via the check valve at the hydraulic switching valve 25A. As a result, the control valve 12 is switched with quick response in the vehicle traveling at high speed to assure desirable acceleration performance.

In the embodiment of the present invention described above, the accelerating operation via the travel pedal is restricted so as to prevent an abrupt start or an abrupt acceleration of the vehicle.

The electromagnetic switching valve 27 is switched to position B in the vehicle traveling at low speed (V ≤ V0) if the speed-reduction ratio is set to low, i.e., if the speed-reduction ratio value is equal to or greater than the predetermined value, or if the motor displacement is equal to or greater than the predetermined value (if the large motor displacement qm2 is assumed) . In other words, in the embodiment described above, the electromagnetic switching valve 27 is switched to position B if an acceleration-limiting condition is met. The acceleration-limiting conditions under which the electromagnetic switching valve 27 is switched to position B are not limited to those described above. For instance, a value obtained as the product of the speed-reduction ratio, the motor displacement and a predetermined constant may be set as an equivalent capacity, and the electromagnetic switching valve 27 may be switched to position B by judging that an acceleration-limiting condition is met if the equivalent capacity during low-speed traveling operation is equal to or greater than a predetermined value. In this case, the controller 30 should calculate the equivalent capacity and make a decision as to whether or not the acceleration-limiting condition is satisfied'. A means other than the selector switch 31 may be utilized as a speed-reduction ratio detectionmeans and a means other than the pressure sensor 32 may be used as a motor displacement detection means. As an alternative, a separate equivalent capacity calculation means may be employed. In addition, the electromagnetic switching valve 27 may be switched to position B by assuming that an acceleration-limiting condition is met if the speed ratio is low, i.e., if the speed ratio is equal to or greater than a predetermined value, if the motor displacement is equal to or greater than a predetermined value or if the equivalent capacity is equal to or greater than a predetermined value, regardless of the vehicle speed.

If the decision as to whether or not an acceleration-limiting condition is met is made simply by deciding whether or not the motor displacement is equal to or greater than a predetermined value (whether or not the large motor displacement qm2 is assumed), the speed-reduction ratio does not need to be detected. If the decision as to whether or not an acceleration-limiting condition is met is made simply by deciding whether or not the speed-reduction ratio is set to low, i.e., whether or not the speed-reduction ratio is equal to or greater than a predetermined value, the motor displacement does not need to be detected. Under such circumstances, the hydraulic motor 5 may be constituted as a fixed displacement traveling hydraulic motor.

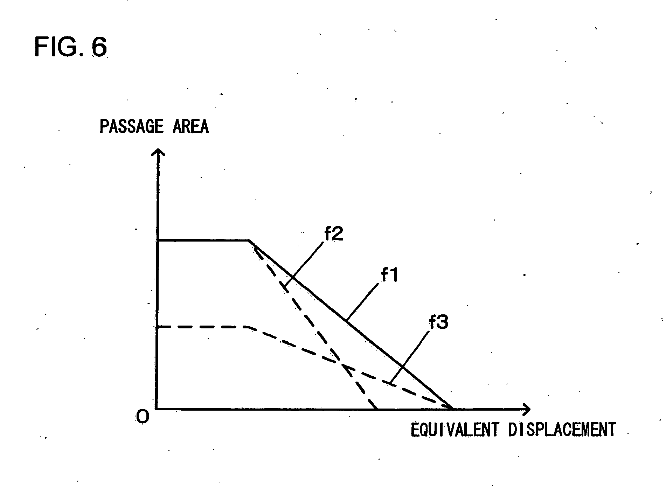

In the embodiment described above, the hydraulic switching valves 25A and 25B are switched on/off to position AortopositionB. However, the present invention is not limited to this example and instead, the hydraulic switching valves 25A and 25B may each be constituted with a variable throttle valve or metering valve. In conjunction with such hydraulic switching valves, the extent of switchover may be controlled in correspondence to the equivalent capacity so that the passage area of the hydraulic switching valves 25A and 25B decreases as the equivalent capacity increases, as indicated by the characteristics f1 in FIG. 6. The passage area characteristics f1 in relation to the equivalent capacity may be adjusted in correspondence to the traveling speed indicated by the relationship between the characteristics f1 and the characteristics f2 or the relationship between the characteristics f1 and the characteristics f3. By selecting the characteristics f1 when the vehicle is traveling at high speed and selecting the characteristics f2 or f3 when the vehicle is traveling at low speed, the shock occurring during acceleration in a low-speed traveling state or in a high load state can be more effectively reduced. In other words, the hydraulic switching valves 25A and 25B may each be constituted with a valve with metering characteristics.'

In addition, while the electromagnetic switching valve 27 is switched in response to the control signal provided from the controller 30 so as to slow down the response of the control valve 12 to the pilot pressure when an acceleration-limiting condition is satisfied, e.g., when the large motor displacement is assumed, when the speed-reduction ratio is large or when the equivalent capacity is large, compared to the response of the control valve 12 when no such condition is met, an acceleration limiting means other than this may be adopted. For instance, the pump capacity of the hydraulic pump 11 may be reduced when an acceleration-limiting condition is met, compared to the pump capacity assumed when no such condition is satisfied.

While the flow of pressure oil to the hydraulic motor 5 is controlled via the control valve 12 in the embodiment described above, a pressure oil control means other than this may be adopted. The rotation of the hydraulic motor 5 may be communicated to the tires 8 via a speed-reducing mechanism other than the transmission 6. In addition, while the present invention is adopted in a hydraulic excavator in the embodiment described above, the present invention may be equally effectively adopted in another type of hydraulically-driven vehicle. Namely, as long as the features characterizing the present invention and the functions of the present invention are not compromised, the present invention is not limited to the traveling control device achieved in the embodiment. It is to be noted that the embodiment described above simply represents an example and no limitations or restrictions are imposed by the correspondence between the description of the embodiment and the description in the scope of patent claims.

## Claims

1. A traveling control device for a hydraulically-driven vehicle, comprising:
a traveling hydraulic motor (5) driven by oil delivered from a hydraulic pump (11);
a speed-reducing mechanism (6) with an adjustable speed-reduction ratio, that slows down rotation of the hydraulic motor and transmits the slowed rotation to wheels (8) ;
a pressure oil control device (12) that controls a flow of pressure oil from the hydraulic pump to the hydraulic motor in correspondence to an extent to which a traveling pedal (22) is operated, the pressure oil control device (12) being a control valve driven by pilot pressure corresponding to the extent to which the traveling pedal (22) is operated;
a speed-reduction ratio detection device (31)that detects the speed-reduction ratio at the speed-reducing mechanism;
a vehicle speed detection device (33) that detects a vehicle speed; and
an acceleration limiting device (30,27,25A,25B) that restricts accelerating operation of the hydraulic motor;
**Characterized in that** the acceleration limiting device (30,27,25A,25B) restricts accelerating operation of the hydraulic motor in response to an operation of the traveling pedal, when an acceleration-limiting condition, that is, the speed-reduction ratio detected by the speed-reduction ratio detection device is equal to or greater than a predetermined value, is met and the vehicle speed detected by the vehicle speed detection device is equal to or less than a predetermined value, by slowing down response of the control valve to the pilot pressure when the acceleration-limiting condition is met, compared to response of the control valve when no acceleration-limiting condition is met.

2. A traveling control device according to claim 1, wherein:
the hydraulic motor (5) is a variable displacement traveling hydraulic motor;
the traveling control device further comprises a motor displacement detection device (32) that detects a motor displacement of the hydraulic motor; and
in a case where the speed-reduction ratio detected by the speed-reduction ratio detection device (31) is smaller than the predetermined value, the acceleration limiting device (30,27,25A,25B) restricts the accelerating operation of the hydraulic motor achieved in response to the operation of the traveling pedal (22), when another acceleration-limiting condition, that is, the motor displacement detected by the motor displacement detection device (32) is equal to or greater than a predetermined value, is met and the vehicle speed detected by the vehicle speed detection device (33) is equal to or less than a predetermined value.

3. A traveling control device according to claim 2, further comprising:
an equivalent capacity calculating device (30) that calculates an equivalent capacity assuming a correlation to a value obtained by multiplying the motor displacement of the hydraulic motor (5) by the speed-reduction ratio at the speed-reducing mechanism (6); wherein
the acceleration limiting device (30,27,25a,25B) restricts the accelerating operation of the hydraulic motor achieved in response to the operation of the traveling pedal (22) , when another acceleration-limiting condition, that is, the equivalent capacity calculated by the equivalent capacity calculating device is equal to or greater than a predetermined value, is met and the vehicle speed detected by the vehicle speed detection device (33) is equal to or less than a predetermined value.

4. A traveling control method adopted in a hydraulically-driven vehicle comprising a variable displacement traveling hydraulic motor (5) driven by oil delivered from a hydraulic pump (11) and a pressure oil control device (12) that controls a flow of pressure oil from the hydraulic pump to the hydraulic motor in correspondence to an extent to which a traveling pedal (22) is operated, wherein the pressure oil control device (12) is a control valve driven by pilot pressure corresponding to the extent to which the traveling pedal (22) is operated, the method comprising:
detecting an acceleration-limiting condition, that is, (a) a speed-reduction ratio at a speed-reducing mechanism (6) is equal to or greater than a predetermined value, (b) a motor displacement of the variable displacement traveling hydraulic motor (5) is equal to or greater than a predetermined value or (c) an equivalent capacity assuming a correlation to a value obtained by multiplying the motor displacement by the speed-reduction ratio at the speed-reducing mechanism is equal to or greater than a predetermined value;
detecting a vehicle speed with a vehicle speed detection device (31); **characterized by**
restricting accelerating operation of the hydraulic motor achieved in response to an operation of a traveling pedal (22), when the acceleration-limiting condition is met and the vehicle speed detected by the vehicle speed detection device is equal to or less than a predetermined value, by slowing down response of the control valve to the pilot pressure when the acceleration-limiting condition is met, compared to response of the control valve when no acceleration-limiting condition is met.

5. A hydraulically-driven vehicle equipped with a traveling control device according to any of claims 1 through 3.

## Patentansprüche

1. Fahrsteuerungsvorrichtung für ein hydraulisch angetriebenes Fahrzeug, umfassend:
einen hydraulischen Fahrmotor (5), der von Öl angetrieben wird, das von einer Hydraulikpumpe (11) geliefert wird;
einen Untersetzungsmechanismus (6) mit einem einstellbaren Untersetzungsverhältnis, das eine Drehzahl des Hydraulikmotors untersetzt und die langsamere Drehzahl auf Räder (8) überträgt;
eine Öldrucksteuerungsvorrichtung (12), die einen Fluss von Drucköl von der Hydraulikpumpe zum Hydraulikmotor in Entsprechung zu einem Grad steuert, zu dem ein Fahrpedal (22) betätigt wird, wobei die Öldrucksteuervorrichtung (12) ein Steuerventil ist, das von einem Pilotdruck angesteuert wird, der dem Grad entspricht, zu dem das Fahrpedal (22) betätigt wird;
eine Untersetzungsverhältnis-Erfassungsvorrichtung (31), die das Untersetzungsverhältnis an dem Untersetzungsmechanismus erfasst,
eine Fahrzeuggeschwindigkeits-Erfassungsvorrichtung (33), die eine Fahrzeuggeschwindigkeit erfasst; und
eine Beschleunigungsbegrenzungsvorrichtung (30, 27, 25A, 25B), die einen Beschleunigungsbetrieb des Hydraulikmotors begrenzt;
**dadurch gekennzeichnet, dass** die Beschleunigungsbegrenzungsvorrichtung (30, 27, 25A, 25B) einen Beschleunigungsbetrieb des Hydraulikmotors in Reaktion auf eine Betätigung des Fahrpedals begrenzt, wenn eine Beschleunigungsbegrenzungsbedingung, das heißt, dass das von der Untersetzungsverhältnis-Erfassungsvorrichtung erfasst Untersetzungsverhältnis gleich oder größer als ein vorbestimmter Wert ist, zutrifft, und die von der Fahrzeuggeschwindigkeits-Erfassungsvorrichtung erfasste Fahrzeuggeschwindigkeit gleich oder kleiner als ein vorbestimmter Wert ist, durch Verlangsamen eines Ansprechens des Steuerventils auf den Pilotdruck, wenn die Beschleunigungsbegrenzungsbedingung zutrifft, im Vergleich zu einem Ansprechen des Steuerventils, wenn keine Beschleunigungsbegrenzungsbedingung zutrifft.

2. Fahrsteuerungsvorrichtung gemäß Anspruch 1, wobei:
der Hydraulikmotor (5) ein Fahr-Hydraulikmotor mit variabler Förderleistung ist;
die Fahrsteuerungsvorrichtung ferner eine Motorförderleistungs-Erfassungsvorrichtung (32) umfasst, die eine Motorförderleistung des Hydraulikmotors erfasst; und
in einem Fall, in dem das von der Untersetzungsverhältnis-Erfassungsvorrichtung (31) erfasst Untersetzungsverhältnis kleiner als der vorbestimmte Wert ist, die Beschleunigungsbegrenzungsvorrichtung (30, 27, 25A, 25B) den Beschleunigungsbetrieb des Hydraulikmotors begrenzt, der in Reaktion auf die Betätigung des Fahrpedals (22) bewerkstelligt wird, wenn eine weitere Beschleunigungsbegrenzungsbedingung, das heißt, dass die von der Motorförderleistungs-Erfassungsvorrichtung (32) erfasste Motorförderleistung gleich oder größer als ein vorbestimmter Wert ist, zutrifft, und die von der Fahrzeuggeschwindigkeits-Erfassungsvorrichtung (33) erfasst Fahrzeuggeschwindigkeit gleich oder kleiner als ein vorbestimmter Wert ist.

3. Fahrsteuerungsvorrichtung gemäß Anspruch 2, ferner umfassend:
eine Äquivalente-Kapazität-Berechnungsvorrichtung (30), die eine äquivalente Kapazität unter der Annahme einer Korrelation mit einem Wert, der durch Multiplizieren der Motorförderleistung des Hydraulikmotors (5) mit dem Untersetzungsverhältnis beim Untersetzungsmechanismus (6) erhalten wird, berechnet; wobei
die Beschleunigungsbegrenzungsvorrichtung (30, 27, 25a, 25B) den Beschleunigungsbetrieb des Hydraulikmotors begrenzt, der in Reaktion auf die Betätigung des Fahrpedals (22) bewerkstelligt wird, wenn eine weitere Beschleunigungsbegrenzungsbedingung, das heißt, dass die von der Äquivalente-Kapazität-Berechnungsvorrichtung berechnete äquivalente Kapazität gleich oder größer als ein vorbestimmter Wert ist, zutrifft, und die von der Fahrzeuggeschwindigkeit-Erfassungsvorrichtung (33) erfasste Fahrzeuggeschwindigkeit gleich oder kleiner als ein vorbestimmter Wert ist.

4. Fahrsteuerungsverfahren, das in einem hydraulisch angetriebenen Fahrzeug angewendet wird, das einen hydraulischen Fahrmotor (5) mit variabler Förderleistung, der von Öl angetrieben wird, die von einer Hydraulikpumpe (11) geliefert wird, und eine Öldrucksteuervorrichtung (12) umfasst, die einen Fluss eines Drucköls von der Hydraulikpumpe zum Hydraulikmotor in Entsprechung zu einem Grad liefert, zu dem ein Fahrpedal (22) betätigt wird, wobei die Öldrucksteuervorrichtung (12) ein Steuerventil ist, das von einem Pilotdruck angesteuert wird, der dem Grad entspricht, zu dem das Fahrpedal (22) betätigt wird, wobei das Verfahren umfasst:
Erfassen einer Beschleunigungsbegrenzungsbedingung, das heißt a) ein Untersetzungsverhältnis an einem Untersetzungsmechanismus (6) ist gleich oder größer als ein vorbestimmter Wert, b) eine Motorförderleistung des hydraulischen Fahrmotors (5) mit variabler Förderleistung ist gleich oder größer als ein vorbestimmter Wert oder c) eine äquivalente Kapazität unter der Annahme einer Korrelation mit einem Wert, der durch Multiplizieren der Motorförderleistung mit dem Untersetzungsverhältnis beim Untersetzungsmechanismus erhalten wird, ist gleich oder größer als ein vorbestimmter Wert;
Erfassen einer Fahrzeuggeschwindigkeit mit einer Fahrzeuggeschwindigkeit-Erfassungsvorrichtung (31); **gekennzeichnet durch**
Begrenzen eines Beschleunigungsbetriebs des Hydraulikmotors, der in Reaktion auf eine Betätigung eines Fahrpedals (22) bewerkstelligt wird, wenn die Beschleunigungsbegrenzungsbedingung zutrifft und die von der Fahrzeuggeschwindigkeits-Erfassungsvorrichtung erfasste Fahrzeuggeschwindigkeit gleich oder kleiner als ein vorbestimmter Wert ist, **durch** Verlangsamen des Ansprechens des Steuerventils auf den Pilotdruck, wenn die Beschleunigungsbegrenzungsbedingung zutrifft, verglichen mit einem Ansprechen des Steuerventils, wenn keine Beschleunigungsbegrenzungsbedingung zutrifft.

5. Hydraulisch angetriebenes Fahrzeug, das mit einer Fahrsteuerungsvorrichtung gemäß einem der Ansprüche 1 bis 3 ausgerüstet ist.

## Revendications

1. Dispositif de commande de déplacement pour un véhicule à entraînement hydraulique, comprenant :
un moteur hydraulique de déplacement (5) entraîné par de l'huile distribuée par une pompe hydraulique (11),
un mécanisme réducteur de vitesse (6) avec un rapport réglable de réduction de vitesse, qui ralentit la rotation du moteur hydraulique et transmet la rotation ralentie à des roues (8),
un dispositif de régulation d'huile sous pression (12) qui régule un flux d'huile sous pression envoyé par la pompe hydraulique au moteur hydraulique, en fonction d'un degré d'actionnement d'une pédale de déplacement (22), le dispositif de régulation d'huile sous pression (12) étant une vanne de régulation commandée par une pression pilote correspondant au degré d'actionnement de la pédale de déplacement (22),
un dispositif de détection de rapport de réduction de vitesse (31) qui détecte le rapport de réduction de vitesse sur le mécanisme réducteur de vitesse,
un dispositif de détection de vitesse de véhicule (33) qui détecte une vitesse de véhicule, et
un dispositif limiteur d'accélération (30, 27, 25A, 25B) qui limite l'action d'accélération du moteur hydraulique,
**caractérisé en ce que** le dispositif limiteur d'accélération (30, 27, 25A, 25B) limite l'action d'accélération du moteur hydraulique en réponse à un actionnement de la pédale de déplacement, lorsqu'une condition de limitation d'accélération est remplie, c'est-à-dire que le rapport de réduction de vitesse détecté par le dispositif de détection de rapport de réduction de vitesse est égal ou supérieur à une valeur prédéterminée, et la vitesse de véhicule détectée par le dispositif de détection de vitesse de véhicule est égale ou inférieure à une valeur prédéterminée, en ralentissant la réponse de la vanne de régulation à la pression pilote lorsque la condition de limitation d'accélération est remplie, comparé à la réponse de la vanne de régulation lorsqu'aucune condition de limitation d'accélération n'est remplie.

2. Dispositif de commande de déplacement selon la revendication 1, dans lequel
le moteur hydraulique (5) est un moteur hydraulique de déplacement à cylindrée variable,
le dispositif de commande de déplacement comprend en outre un dispositif de détection de cylindrée de moteur (32) qui détecte une cylindrée de moteur du moteur hydraulique, et
dans le cas où le rapport de réduction de vitesse détecté par le dispositif de détection de rapport de réduction de vitesse (31) est inférieur à la valeur prédéterminée, le dispositif limiteur d'accélération (30, 27, 25A, 25B) limite l'action d'accélération du moteur hydraulique obtenue en réponse à l'actionnement de la pédale de déplacement (22), lorsqu'une autre condition de limitation d'accélération est remplie, c'est-à-dire que la cylindrée de moteur détectée par le dispositif de détection de cylindrée de moteur (32) est égale ou supérieure à une valeur prédéterminée, et la vitesse de véhicule détectée par le dispositif de détection de vitesse de véhicule (33) est égale ou inférieure à une valeur prédéterminée.

3. Dispositif de commande de déplacement selon la revendication 2, comprenant en outre :
un dispositif de calcul de capacité équivalente (30) qui calcule une capacité équivalente en corrélation avec une valeur obtenue en multipliant la cylindrée de moteur du moteur hydraulique (5) par le rapport de réduction de vitesse sur le mécanisme réducteur de vitesse (6); dans lequel
le dispositif limiteur d'accélération (30, 27, 25A, 25B) limite l'action d'accélération du moteur hydraulique obtenue en réponse à l'actionnement de la pédale de déplacement (22), lorsqu'une autre condition de limitation d'accélération est remplie, c'est-à-dire que la capacité équivalente calculée par le dispositif de calcul de capacité équivalente est égale ou supérieure à une valeur prédéterminée, et la vitesse de véhicule détectée par le dispositif de détection de vitesse de véhicule (33) est égale ou inférieure à une valeur prédéterminée.

4. Procédé de commande de déplacement mis en oeuvre dans un véhicule à entraînement hydraulique, comprenant un moteur hydraulique de déplacement (5) à cylindrée variable, entraîné par de l'huile distribuée par une pompe hydraulique (11) et un dispositif de régulation d'huile sous pression (12) qui régule un flux d'huile sous pression envoyé par la pompe hydraulique au moteur hydraulique, en fonction d'un degré d'actionnement d'une pédale de déplacement (22), le dispositif de régulation d'huile sous pression (12) étant une vanne de régulation commandée par une pression pilote correspondant au degré d'actionnement de la pédale de déplacement (22), le procédé comprenant :
la détection d'une condition de limitation d'accélération, c'est-à-dire que (a) un rapport de réduction de vitesse sur un mécanisme réducteur de vitesse (6) est égal ou supérieur à une valeur prédéterminée, (b) une cylindrée de moteur du moteur hydraulique de déplacement (5) à cylindrée variable est égale ou supérieure à une valeur prédéterminée ou (c) une capacité équivalente en corrélation avec une valeur obtenue en multipliant la cylindrée de moteur par le rapport de réduction de vitesse sur le mécanisme réducteur de vitesse est égale ou supérieure à une valeur prédéterminée,
la détection d'une vitesse de véhicule par un dispositif de détection de vitesse de véhicule (31), **caractérisé par**
la limitation de l'action d'accélération du moteur hydraulique, obtenue en réponse à l'actionnement d'une pédale de déplacement (22), lorsque la condition de limitation d'accélération est remplie et la vitesse de véhicule détectée par le dispositif de détection de vitesse de véhicule est égale ou inférieure à une valeur prédéterminée, en ralentissant la réponse de la vanne de régulation à la pression pilote lorsque la condition de limitation d'accélération est remplie, comparé à la réponse de la vanne de régulation lorsqu'aucune condition de limitation d'accélération n'est remplie.

5. Véhicule à entraînement hydraulique équipé d'un dispositif de commande de déplacement selon l'une quelconque des revendications 1 à 3.
